# EUROPÄISCHE PATENTSCHRIFT

(11) **EP 3 535 550 B1**
(45) Veröffentlichungstag und Bekanntmachung des Hinweises auf die Patenterteilung: **30.11.2022**
(21) Anmeldenummer: 17787902.0
(22) Anmeldetag: 10.10.2017
(51) Int. Cl.: G01F 1/688, G01F 15/00

(54) **VERFAHREN ZUR HERSTELLUNG EINES FÜHLERS FÜR EIN THERMISCHES DURCHFLUSSMESSGERÄT, FÜHLER, UND DURCHFLUSSMESSGERÄT**
METHOD OF MANUFACTURING A PROBE FOR A THERMAL TYPE FLOWMETER, PROBE, AND FLOWMETER
PROCÉDÉ DE FABRICATION D'UNE SONDE POUR UN DÉBITMÈTRE DU TYPE THERMIQUE, SONDE, ET DÉBITMÈTRE

(30) Priorität: 04.11.2016 DE 102016121111
(43) Veröffentlichungstag der Anmeldung: 11.09.2019
(73) Patentinhaber: Endress+Hauser Flowtec AG, 4153 Reinach (CH)
(72) Erfinder: GABERTHÜEL, Stephan, 4104 Oberwil (CH); GRÜN, Alexander, 79539 Lörrach (DE); SCHULTHEIS, Hanno, 3274 Hermrigen (CH); BAUR, Tobias, 4145 Reinach (CH); BARTH, Martin, 4125 Riehen (CH); BADARLIS, Anastasios, 4127 Birsfelden (CH); NEYERLIN, Lars, 4246 Wahlen (CH); ARNOLD, Martin, 4153 Reinach (CH); POPP, Oliver, 4104 Oberwil (CH)
(74) Vertreter: Waselikowski, Stefan
(86) Internationale Anmeldenummer: PCT/EP2017/075789
(87) Internationale Veröffentlichungsnummer: WO 2018/082874

(56) Entgegenhaltungen:
- US-A- 5 271 138
- US-A1- 2005 223 828
- US-A1- 2009 260 431
- US-A1- 2013 269 428

## Beschreibung

Die Erfindung betrifft ein Verfahren zur Herstellung einer Sonde eines thermischen Durchflussmessgeräts zur Messung des Massedurchflusses eines Mediums in einem Messrohr, eine Sonde und ein Durchflussmessgerät.

Thermische Durchflussmessgeräte sind seit langer Zeit Stand der Technik, es werden ein oder mehrere Sonden in ein durch ein Messrohr strömendes Medium eingeführt, wobei die Sonden dazu eingerichtet sind, die Temperatur des Mediums zu messen oder das Medium zu heizen. Beispielsweise kann die temperaturmessende Sonde stromabwärts der heizenden Sonde angeordnet sein, so dass die temperaturmessende Sonde über das durch die heizende Sonde erwärmte Medium erwärmt wird.

Wichtig für eine hohe Messgenauigkeit eines thermischen Durchflussmessgeräts und für eine geringe Messgenauigkeitsschwankung zwischen verschiedenen Durchflussmessgeräten eines gleichen Typs ist eine konstante Bauqualität der verwendeten Sonden. Wichtig für eine hohe Sensibilität der Sonden in Bezug auf schnelle Temperaturschwankungen des Mediums ist ein geringer Wärmeübergangswiderstand zwischen einer Kontaktfläche der Sonde mit dem Medium und einem heizenden bzw. temperaturmessenden Thermoelement.

Der Stand der Technik, beispielsweise die DE102008015359A1, zeigt eine Sonde mit einer Sondenhülse, welche Sondenhülse ein in ein Füllmaterial eingebettetes Thermoelement aufweist.

Die US20090260431A1 zeigt eine Sonde eines Anemometers bzw. thermischen Massedurchflussmessgeräts, bei welcher während der Herstellung ein Platzhalter und ein Temperatursensor in einer Hülse platziert werden, wobei ein Lot die genannten Bauteile umfließt.

Die DE102009028850A1 zeigt eine weitere Sonde, bei welcher ein Thermoelement in einer Sondenhülse in Füllmaterial eingebettet ist.

Die US5271138B zeigt ein stangenförmiges thermisches Anemometer zur Geschwindigkeitsmessung von Gasen mit einem Sensorende, welches eine Öffnung und darin angeordnete Temperatursensoren und ein Heizelement aufweist.

Die US20050223828A1 zeigt eine Sonde eines thermischen Anemometers, bei welcher ein Dünnfilmsensorelement in einen Spalt eines Sondenkopfs hineingeschoben ist.

Nachteilhaft an einer solchen Lösung ist, dass ein Füllmaterial hinsichtlich des Wärmeübergangs zwischen Sonde und einem die Sonde umgebenden Mediums einerseits Schwankungen zwischen verschiedenen Sonden einer Serie verursacht und andererseits anfällig in Bezug auf Alterung der Sonde ist, so dass mit steigender Lebenszeit einer solchen Sonde zur Vermeidung von Messfehlern nachkalibriert werden muss.

Aufgabe der Erfindung ist es daher, eine Sonde vorzuschlagen, welche eine verbesserte Stabilität hinsichtlich ihrer Herstellung und hinsichtlich ihres Langzeitverhaltens aufweist.

Diese Aufgabe wird gelöst durch ein Verfahren zur Herstellung einer Sonde eines thermischen Durchflussmessgeräts gemäß Anspruch 1, durch eine Sonde für ein thermisches Durchflussmessgerät gemäß Anspruch 8 und durch ein thermisches Durchflussmessgerät gemäß Anspruch 14.

Ein erfindungsgemäßes Verfahren zur Herstellung einer Sonde eines thermischen Durchflussmessgeräts zur Messung des Massedurchflusses eines Mediums in einem Messrohr weist dabei folgende Schritte auf:
Einbringen eines Sondenkerns umfassend ein Hartlot und ein Kernelement in eine erste Sondenhülse, wobei die erste Sondenhülse ein offenes erstes Ende und ein dem ersten Ende abgewandtes geschlossenes zweites Ende aufweist;
Schmelzen des Hartlots;
Fixieren des Kernelements durch Abkühlen des Hartlots auf eine Temperatur kleiner der Erstarrungstemperatur;
Aufbringen eines Thermoelements auf eine Kontaktfläche des Kernelements oder des erstarrten Hartlots.

In einer Ausgestaltung des Verfahrens umfasst nach Erstarren des Hartlots das Hartlot das Kernelement vollständig.

In einer Ausgestaltung des Verfahrens weist das Kernelement einen Masseschwerpunkt, eine dem zweiten Ende zugewandte zweite Seite und eine bezüglich des Masseschwerpunkts dem zweiten Ende abgewandte erste Seite auf,
wobei nach Erstarren des Hartlots die erste Seite des Kernelements zumindest teilweise frei von Hartlot ist.

In einer Ausgestaltung des Verfahrens ist oder wird die Kontaktfläche auf das Anbringen des Thermoelements durch mechanische Bearbeitung vorbereitet.

In einer Ausgestaltung des Verfahrens wird nach Aufbringen eines Thermoelements auf die Kontaktfläche eine zweite Sondenhülse mit einem offenen dritten und einem offenen vierten Ende mittels des dritten offenen Endes leckdicht an das erste Ende angefügt, insbesondere angeschweißt wird, wobei die zweite Sondenhülse einen ersten Bereich des Sondenkerns vollständig umgreift.

In einer Ausgestaltung des Verfahrens ist der erste Bereich des Sondenkerns in einem Teilbereich von sämtlichen Oberflächen der ersten Sondenhülse und/oder der zweiten Sondenhülse beabstandet ist, wobei der Teilbereich sämtliche erste Querschnitte des Sondenkerns umfasst, welche erste Querschnitte die Kontaktfläche schneiden oder berühren.

In einer Ausgestaltung des Verfahrens wird das Thermoelement mittels einer Lot- oder Sinterschicht an der Kontaktfläche angebracht wird.

Eine erfindungsgemäße Sonde eines thermischen Durchflussmessgeräts zur Messung des Massedurchflusses eines Mediums in einem Messrohr umfasst:
Eine erste Sondenhülse mit einem offenen ersten Ende und einem geschlossenen zweiten Ende;
Einen Sondenkern, welcher Sondenkern die erste Sondenhülse zumindest teilweise ausfüllt, wobei der Sondenkern ein Hartlot und ein Kernelement aufweist;

Ein Thermoelement, welches mit dem Sondenkern thermisch gekoppelt ist, wobei das Thermoelement dazu eingerichtet ist, die Temperatur des Sondenkerns zu erhöhen oder zu erfassen;
wobei
der Sondenkern durch Schmelzen des Hartlots in der ersten Sondenhülse hergestellt ist.

In einer Ausgestaltung der Sonde weist der Sondenkern eine erste Längsachse, eine mit der ersten Sondenhülse mechanisch verbundene Mantelfläche, einen Massenschwerpunkt, und eine bezüglich des Massenschwerpunkts dem zweiten Ende des Sondenkerns abgewandte Kontaktfläche auf,
wobei das Thermoelement mittels einer Lot- oder Sinterschicht an der Kontaktfläche angebracht ist,
wobei die Kontaktfläche eine Fläche des Kernelements und/oder des Hartlots ist.

In einer Ausgestaltung der Sonde umfasst der Sondenkern einen ersten Bereich, welcher aus der ersten Sondenhülse in axialer Richtung herausragt, wobei der erste Bereich die Kontaktfläche aufweist.

In einer Ausgestaltung der Sonde ist der erste Bereich durch eine zweite Sondenhülse mit einem offenen dritten Ende und einem offenen vierten Ende umfasst, welche zweite Sondenhülse über das dritte Ende leckdicht an das offene erste Ende der ersten Sondenhülse angefügt, insbesondere angeschweißt ist,
wobei der erste Bereich in einem Teilbereich von sämtlichen Oberflächen der ersten Sondenhülse und/oder zweiten Sondenhülse beabstandet ist, wobei der Teilbereich sämtliche erste Querschnitte des Sondenkerns umfasst, welche erste Querschnitte die Kontaktfläche schneiden oder beinhalten.

In einer Ausgestaltung der Sonde weist die erste Sondenhülse einen Edelstahl auf; und das Kernelement weist Kupfer oder Silber auf; wobei das Hartlot eine Schmelztemperatur unterhalb der Schmelztemperatur des Kernelements aufweist. Typischerweise weist ein Hartlot eine Schmelztemperatur kleiner als 1000 Grad auf. Typischerweise weist ein Hartlot eine Schmelztemperatur größer als 400 Grad auf.

In einer Ausgestaltung der Sonde weist das Hartlot Silber oder Kupfer auf, wobei das Hartlot zumindest eine weitere Komponente aufweisen kann, welche weitere Komponente aus folgender Liste ist: Palladium, Nickel, Zinn, Gold, Indium.

Ein erfindungsgemäßes thermisches Durchflussmessgerät zur Messung des Massedurchflusses eines Mediums in einem Messrohr mit mindestens einer erfindungsgemäßen Sonde umfasst:
ein Messrohr mit einer zweiten Längsachse;
wobei die mindestens eine Sonde in das Messrohr eingelassen ist;
eine elektronische Betriebsschaltung, welche dazu eingerichtet ist, die mindestens eine Sonde zu betreiben,

In einer Ausgestaltung des Durchflussmessgeräts umfasst das thermische Durchflussmessgerät mindestens zwei Sonden,
wobei die elektronische Betriebsschaltung dazu eingerichtet ist, mindestens eine erste Sonde zu beheizen,
wobei die elektronische Betriebsschaltung dazu eingerichtet ist, die Temperatur des Mediums mittels mindestens einer zweiten Sonde zu bestimmen.

Im Folgenden wird die Erfindung anhand von Ausführungsbeispielen beschrieben.
Fig. 1 zeigt einen schematischen Verfahrensablauf zur Herstellung einer erfindungsgemäßen Sonde.
Figs. 2 a) bis c) Querschnitte einer erfindungsgemäßen Sonde in verschiedenen Stadien der Herstellung.
Fig. 3 zeigt eine vergrößerte und verzerrte Darstellung des in Fig. 2 c) dargestellten Herstellungsstadiums.
Fig. 4 skizziert Ausführungsbeispiele der erfindungsgemäßen Sonde.
Fig. 5 skizziert eine schematische Frontansicht eines thermischen Durchflussmessgeräts mit zwei erfindungsgemäßen Sonden.

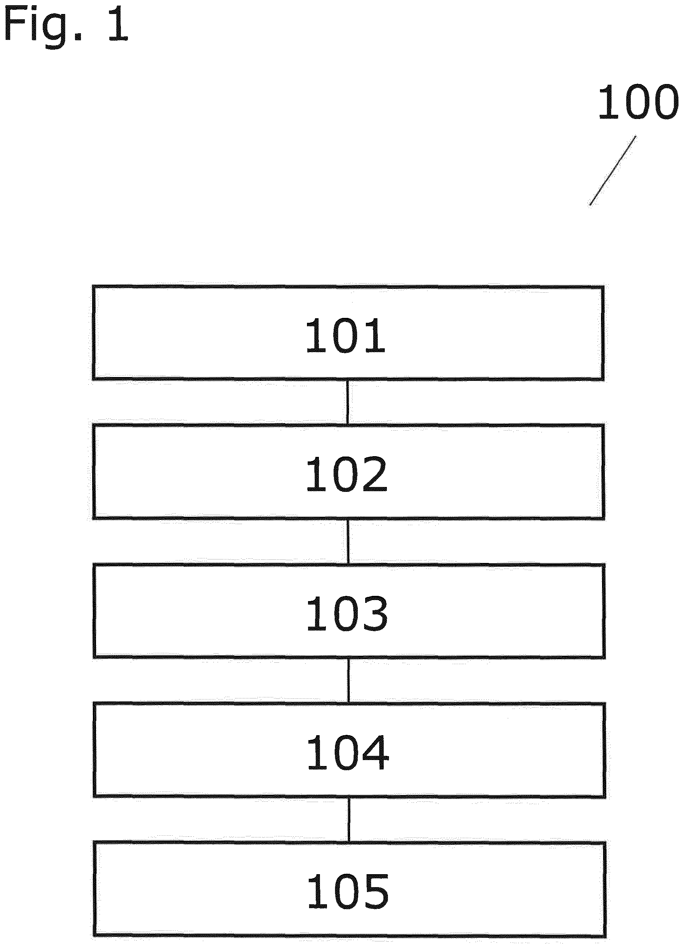

Fig. 1 zeigt eine Ausführungsform eines Verfahrensablaufs 100 zur Herstellung einer erfindungsgemäßen Sonde 10.

In einem ersten Schritt 101 wird ein Sondenkern 13 umfassend ein Kernelement 18 und ein Hartlot 19 in eine erste Sondenhülse 11 eingeführt, wobei das Kernelement 18 Kupfer oder Silber aufweist, und wobei die erste Sondenhülse 11 aus einem Edelstahl hergestellt ist, und wobei die erste Sondenhülse 11 ein offenes erstes Ende 21 und ein dem ersten Ende abgewandtes geschlossenes zweites Ende 22 aufweist

In einem zweiten Schritt 102 wird das Hartlot 19 geschmolzen, so dass sich das flüssige Material des Hartlots 19 in einem Zwischenbereich zwischen Kernelement 18 und erster Sondenhülse 11 des geschlossenen zweiten Endes 22 der ersten Sondenhülse 11 sammelt. Während das Hartlot 19 flüssig ist, entsteht an einer Grenzfläche zwischen Hartlot 18 und erster Sondenhülse 11 und an einer Grenzfläche zwischen Hartlot 18 und Kernelement 18 jeweils eine intermetallische Verbindungsschicht, in welcher sich das Material des Hartlots 19 und das Material der ersten Sondenhülse 11 bzw. des Kernelements 19 vermischen.

In einem dritten Schritt 103 wir der Sondenkern 13 auf eine Temperatur kleiner der Erstarrungstemperatur des Hartlots 19 abgekühlt. Aufgrund der Ausbildung der intermetallischen Verbindungsschichten bleibt der Kontakt zwischen Sondenkern 13 und erster Sondenhülse 11 nach Erstarren des Sondenkerns erhalten.

In einem vierten Schritt 104 wird ein Thermoelement mittels einer Lot- bzw. Sinterschicht an einer Kontaktfläche 14 des Sondenkerns 13 angebracht.

In einem fünften Schritt 105 wird eine zweite Sondenhülse 12 mit einem offenen dritten Ende 23 und einem offenen vierten Ende 24 mittels des offenen dritten Endes leckdicht an das offene erste Ende 21 der ersten Sondenhülse angefügt, insbesondere angeschweißt, wobei die zweite Sondenhülse 12 einen ersten Bereich des Sondenkerns 13 vollständig umgreift, wobei der Sondenkern in einem Teilbereich 16 des ersten Bereichs von sämtlichen Oberflächen der ersten Sondenhülse 11 und/oder der zweiten Sondenhülse 12 beabstandet ist.

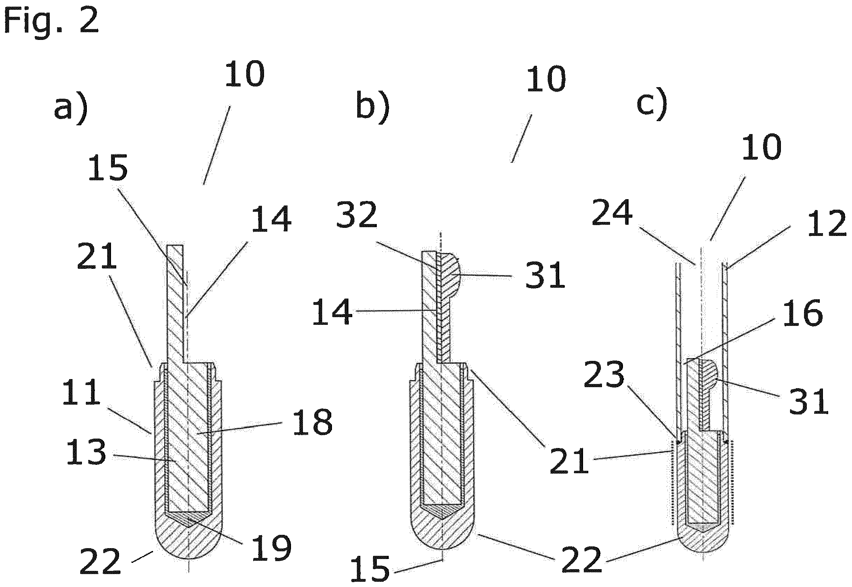

Fig. 2 zeigt Querschnitte einer erfindungsgemäßen Sonde 10 in verschiedenen Stadien der Herstellung.

Fig. 2 a) zeigt einen Querschnitt der Sonde 10 in einem Stadium, in welchem die erste Sondenhülse 11 den Sondenkern 13 mit Kernelement 18 und Hartlot 19 aufweist, wobei das Hartlot in flüssigem oder bereits erstarrtem Zustand ist. Die erste Sondenhülse 11 weist das offene erste Ende 21 und das geschlossene zweite Ende 22 auf. Das Kernelement 18 weist dabei die Kontaktfläche 14 auf, welche dazu eingerichtet ist, das Thermoelement 31 aufzunehmen.

Fig. 2 b) zeigt einen Querschnitt der Sonde 10 in einem Stadium, in welchem nach Erstarren und Abkühlen des Hartlots 19 das Thermoelement 31 an der Kontaktfläche 14 des Kernelements 18 mittels einer Lot- bzw. Sinterschicht 32 angebracht ist.

Fig. 2 c) zeigt einen Querschnitt einer fertiggestellten Sonde 10 mit einer zweiten Sondenhülse 12, welche zweite Sondenhülse über ein drittes Ende 23 der zweiten Sondenhülse an das erste Ende 21 der ersten Sondenhülse 11 angefügt, insbesondere angeschweißt ist.

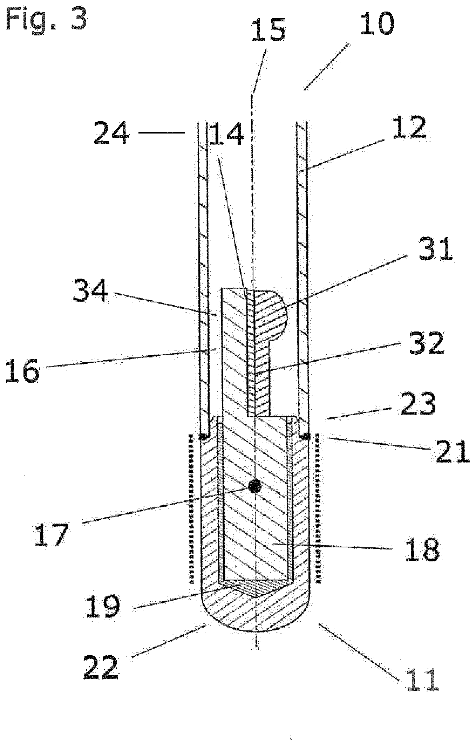

Fig. 3 zeigt eine vergrößerte Darstellung des in Fig. 2 c) gezeigten Querschnitts der fertiggestellten Sonde 10, wobei die Darstellung horizontal verzerrt ist, um Details besser sichtbar zu machen.

Das Thermoelement 31 ist über eine Lot- bzw. Sinterschicht 32 an die Kontaktfläche 14 des Kernelements 18 angebracht. Das Kernelement 18 weist einen Massenschwerpunkt auf und ist dabei im Teilbereich 16 derart ausgestaltet, dass es zu sämtlichen Oberflächen der zweiten Sondenhülse 12 beabstandet ist. Die Beabstandung des Kernelements 18 von der zweiten Sondenhülse bzw. von der ersten Sondenhülse und der zweiten Sondenhülse im Teilbereich 16 sorgt für eine homogene Verteilung der Temperatur im Sondenkern 13. Dadurch ist bei Verwendung der Sonde 10 als Heizelement eine gleichförmige Wärmeabgabe an das Medium im gepunkteten Bereich sichergestellt. Umgekehrt, bei Verwendung der Sonde als Temperaturfühler, ist eine gleichförmige Beaufschlagung des Thermoelements 31 mit der Temperatur des Mediums sichergestellt.

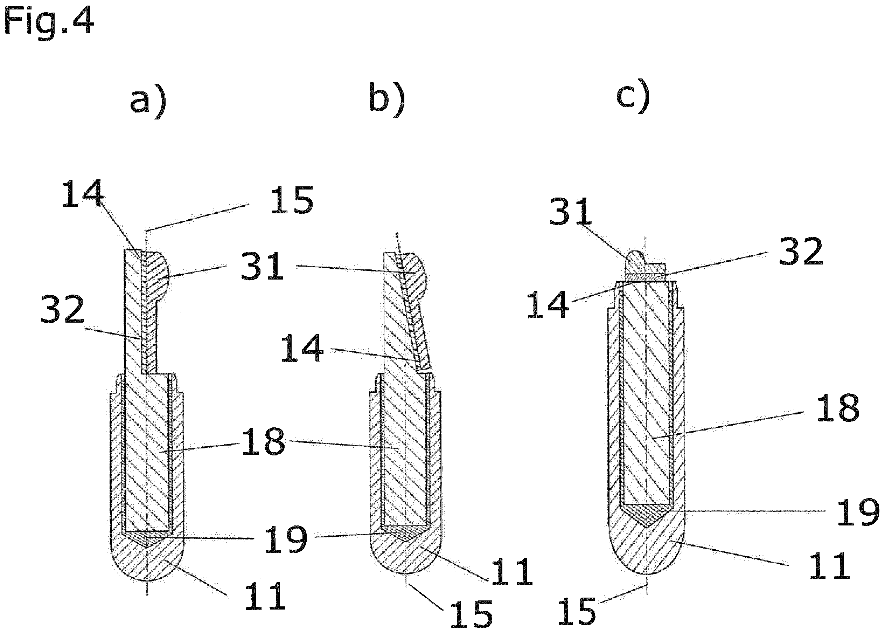

Fig. 4 a) bis c) zeigen schematische Querschnitte mehrerer erfindungsgemäßer Ausführungsformen der Sonde, wobei zwecks Übersichtlichkeit auf die Darstellung der zweiten Sondenhülse verzichtet wurde. Fig. 4 a) zeigt die in Fig. 2 a) bis d) und in Fig. 3 dargestellte Ausführungsform. Fig. 4 b) zeigt eine Ausführungsform mit schräg zur ersten Längsachse 15 gestellten Kontaktfläche 14. Fig. 4 c) zeigt eine Ausführungsform mit senkrecht zur Längsachse 15 stehenden Kontaktfläche 14. Die in Fig. 4 a) und b) gezeigten Ausführungsformen ermöglichen es, bei einem vorgegebenen Thermoelement 31 dünne Sonden zu fertigen.

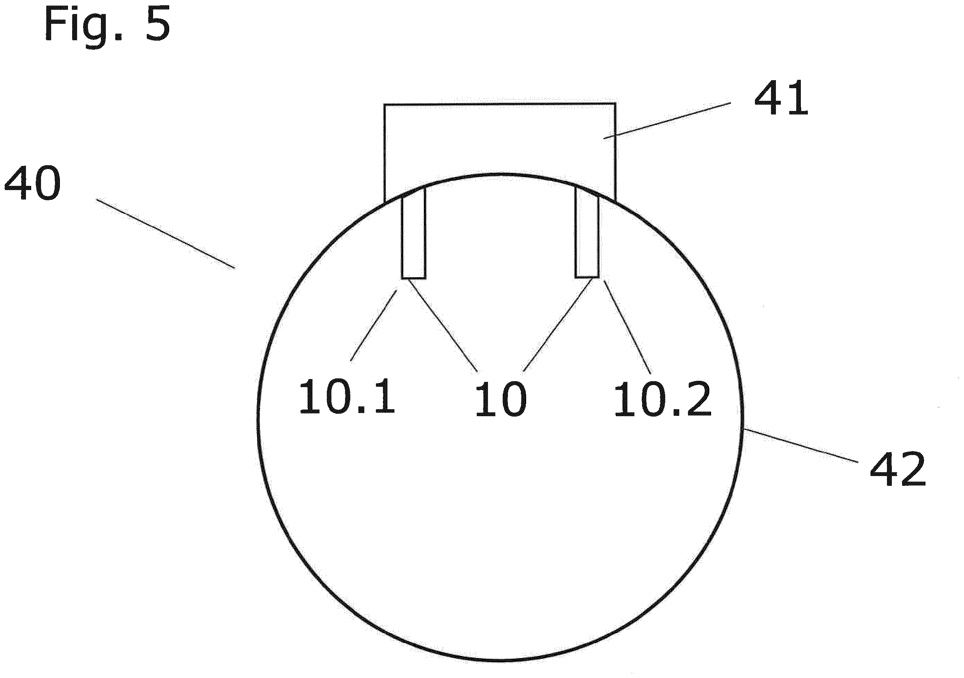

Fig. 5 zeigt eine schematische Frontansicht auf ein erfindungsgemäßes thermisches Durchflussmessgerät 40 mit einem Messrohr 42, zwei erfindungsgemäße Sonden 10, welche im Lumen des Messrohrs 42 angeordnet sind, und einem Gehäuse 41, welches eine elektronischen Betriebsschaltung aufweist, welche elektronische Betriebsschaltung dazu eingerichtet ist, die Sonden 10 zu betreiben.

Um den Massedurchfluss eines Mediums durch das Messrohr 40 zu messen, wird beispielsweise eine Sonde 10.1 im durch das Messrohr 40 strömenden Medium derart beheizt, dass eine Temperaturdifferenz gegenüber der Medientemperatur konstant bleibt. Es bietet sich an, einen zweite Sonde 10.2 zur Temperaturmessung des Mediums zu verwenden, welcher vor oder wie in Fig. 2 gezeigt neben der beheizten Sonde 10.1 angeordnet ist, um die Temperaturdifferenz zu halten. Unter Voraussetzung gleichbleibender Medieneigenschaften wie Dichte oder Zusammensetzung lässt sich über den zum Halten der Temperatur notwendigen Heizstrom auf den Massedurchfluss des Mediums schließen.

Die Sonden 10 können auch in Strömungsrichtung hintereinander angeordnet sein, wobei eine erste stromaufwärtige Sonde das vorbeiströmende Medium und damit eine zweite stromabwärtige Sonde beheizt. Dabei ist die zum Halten einer Temperaturdifferenz benötigte Heizleitung der ersten Sonde antiproportional zur Durchflussgeschwindigkeit des Mediums.

### Bezugszeichenliste

- 10: Sonde
- 10.1: erste Sonde
- 10.2: zweite Sonde
- 11: erste Sondenhülse
- 12: zweite Sondenhülse
- 13: Sondenkern
- 14: Kontaktfläche
- 15: erste Längsachse
- 16: Teilbereich
- 17: Massenschwerpunkt
- 18: Kernelement
- 19: Hartlot
- 21: erstes Ende
- 22: zweites Ende
- 23: drittes Ende
- 24: viertes Ende
- 31: Thermoelement
- 32: Lotschicht / Sinterschicht
- 34: Beabstandung
- 40: thermisches Durchflussmessgerät
- 41: Gehäuse
- 42: Messrohr
- 100: Verfahren zur Herstellung einer erfindungsgemäßen Sonde
- 101: Einbringen eines Sondenkerns umfassend ein Kernelement und ein Hartlot in eine erste Sondenhülse
- 102: Schmelzen des Hartlots
- 103: Abkühlen des Hartlots unter Erstarrungstemperatur
- 104: Anbringen eines Thermoelements an eine Kontaktfläche mittels einer Lot- bzw. Sinterschicht
- 105: Anfügen einer zweiten Sondenhülse an die erste Sondenhülse

## Patentansprüche

1. Verfahren zur Herstellung einer Sonde für ein thermisches Durchflussmessgerät zur Messung des Massedurchflusses eines Mediums in einem Messrohr, wobei das Verfahren folgende Schritte aufweist:
Einbringen eines Sondenkerns (13) umfassend ein Hartlot (19) und ein Kernelement (18) in eine erste Sondenhülse (11), wobei die erste Sondenhülse (11) ein offenes erstes Ende (21) und ein dem ersten Ende abgewandtes geschlossenes zweites Ende (22) aufweist;
Schmelzen des Hartlots (19);
Fixieren des Kernelements durch Abkühlen des Hartlots (19) auf eine Temperatur kleiner der Erstarrungstemperatur;
Aufbringen eines Thermoelements (31) auf eine Kontaktfläche (14) des Kernelements (18) oder des erstarrten Hartlots (19).

2. Verfahren nach Anspruch 1,
wobei nach Erstarren des Hartlots (19) das Hartlot das Kernelement (18) vollständig umfasst.

3. Verfahren nach Anspruch 1,
wobei das Kernelement (18) einen Masseschwerpunkt (17), eine dem zweiten Ende (22) zugewandte zweite Seite und eine bezüglich des Masseschwerpunkts (17) dem zweiten Ende abgewandte erste Seite aufweist,
wobei nach Erstarren des Hartlots die erste Seite des Kernelements zumindest teilweise frei von Hartlot (19) ist.

4. Verfahren nach einem der vorigen Ansprüche,
wobei die Kontaktfläche (14) auf das Anbringen des Thermoelements durch mechanische Bearbeitung vorbereitet wird oder vorbereitet ist.

5. Verfahren nach einem der vorigen Ansprüche,
wobei nach Aufbringen eines Thermoelements (31) auf die Kontaktfläche (14) eine zweite Sondenhülse (12) mit einem offenen dritten Ende (23) und einem offenen vierten Ende (24) mittels des dritten offenen Endes (23) leckdicht an das erste Ende (21) angefügt, insbesondere angeschweißt wird, wobei die zweite Sondenhülse (12) einen ersten Bereich des Sondenkerns (13) vollständig umgreift.

6. Verfahren nach Anspruch 5,
wobei der erste Bereich (13) des Sondenkerns in einem Teilbereich (16) von sämtlichen Oberflächen der ersten Sondenhülse (11) und/oder der zweiten Sondenhülse (12) beabstandet ist, wobei der Teilbereich sämtliche erste Querschnitte des Sondenkerns (13) umfasst, welche erste Querschnitte die Kontaktfläche (14) schneiden oder berühren.

7. Verfahren nach einem der vorigen Ansprüche,
wobei das Thermoelement (31) mittels einer Lot- oder Sinterschicht (32) an der Kontaktfläche (14) angebracht wird.

## Claims

1. Procedure for the manufacture of a probe for a thermal flowmeter designed to measure the mass flow of a medium in a measuring tube, wherein said procedure comprises the following steps:
Introduction of a probe core (13) comprising a hard solder (19) and a core element (18) into a first probe sleeve (11), wherein the first probe sleeve (11) has a first open end (21) and a second closed end (22) facing away from the first end;
Melting of the hard solder (19);
Fixation of the core element by cooling the hard solder (19) to a temperature that is lower than the solidification temperature;
Application of a thermocouple (31) to a contact surface (14) of the core element (18) or the solidified hard solder (19).

2. Procedure as claimed in Claim 1,
wherein, following the solidification of the hard solder (19), the hard solder completely surrounds the core element (18).

3. Procedure as claimed in Claim 1,
wherein the core element (18) has a center of mass (17), a second side facing towards the second end (22) and a first side facing away from the second end with regard to the center of mass (17),
wherein, following the solidification of the hard solder, the first side of the core element is at least partially free from hard solder (19).

4. Procedure as claimed in one of the previous claims,
wherein the contact surface (14) is prepared for the application of the thermocouple by mechanical processing.

5. Procedure as claimed in one of the previous claims,
wherein, following the application of a thermocouple (31) to the contact surface (14), a second probe sleeve (12) with an open third end (23) and an open fourth end (24) is attached, particularly welded, in a leak-tight manner to the first end (21) using the third open end (23), wherein the second probe sleeve (12) completely surrounds a first area of the probe core (13).

6. Procedure as claimed in Claim 5,
wherein, in one subsection (16), the first area (13) of the probe core is spaced away from all the surfaces of the first probe sleeve (11) and/or the second probe sleeve (12), wherein the subsection comprises all the first cross-sections of the probe core (13), said first cross-sections cutting or touching the contact surface (14).

7. Procedure as claimed in one of the previous claims,
wherein the thermocouple (31) is applied to the contact surface (14) using a solder layer or a sinter layer (32).

## Revendications

1. Procédé destiné à la fabrication d'une sonde pour un débitmètre thermique destiné à mesurer le débit massique d'un produit dans un tube de mesure, le procédé comprenant les étapes suivantes :
Mise en place d'un noyau de sonde (13) comprenant une métal d'apport de brasage fort (19) et un élément de noyau (18) dans un premier manchon de sonde (11), le premier manchon de sonde (11) présentant une première extrémité ouverte (21) et une deuxième extrémité fermée (22) opposée à la première extrémité ;
Fusion du métal d'apport de brasage fort (19) ;
Fixation de l'élément de noyau par refroidissement du métal d'apport de brasage fort (19) à une température inférieure à la température de solidification ;
Application d'un thermocouple (31) sur une surface de contact (14) de l'élément de noyau (18) ou du métal d'apport de brasage fort (19) solidifié.

2. Procédé selon la revendication 1,
pour lequel, après solidification du métal d'apport de brasage fort (19), le métal d'apport de brasage fort entoure complètement l'élément de noyau (18).

3. Procédé selon la revendication 1,
pour lequel l'élément de noyau (18) présente un centre de masse (17), un deuxième côté tourné vers la deuxième extrémité (22) et un premier côté opposé à la deuxième extrémité par rapport au centre de masse (17), le premier côté de l'élément de noyau étant au moins partiellement exempt de métal d'apport de brasage fort (19) après solidification du métal d'apport de brasage fort.

4. Procédé selon l'une des revendications précédentes,
pour lequel la surface de contact (14) est préparée pour l'application du thermocouple par usinage mécanique.

5. Procédé selon l'une des revendications précédentes,
pour lequel, après application d'un thermocouple (31) sur la surface de contact (14), un deuxième manchon de sonde (12) avec une troisième extrémité ouverte (23) et une quatrième extrémité ouverte (24) est ajouté, notamment soudé, de manière étanche aux fuites à la première extrémité (21) au moyen de la troisième extrémité ouverte (23), le deuxième manchon de sonde (12) entourant complètement une première zone du noyau de sonde (13).

6. Procédé selon la revendication 5,
pour lequel la première zone (13) du noyau de sonde est espacée dans une zone partielle (16) de toutes les surfaces du premier manchon de sonde (11) et/ou du deuxième manchon de sonde (12), la zone partielle comprenant toutes les premières sections transversales du noyau de sonde (13), lesquelles premières sections transversales coupent ou touchent la surface de contact (14).

7. Procédé selon l'une des revendications précédentes,
pour lequel le thermocouple (31) est appliqué à la surface de contact (14) au moyen d'une couche de brasure ou de frittage (32).
